# NEUE EUROPÄISCHE PATENTSCHRIFT

(11) **EP 2 014 935 B2**
(45) Veröffentlichungstag und Bekanntmachung des Hinweises auf die Entscheidung über den Einspruch: **20.01.2016**
(45) Hinweis auf die Patenterteilung: 30.12.2009
(21) Anmeldenummer: 08017532.6
(22) Anmeldetag: 16.08.2006
(51) Int. Cl.: F16C 9/02, F16C 19/44, F16C 33/58, F16C 33/66

(54) **Radiallagerung**
Radial bearing
Palier radial

(30) Priorität: 13.10.2005 US 726253 P
(43) Veröffentlichungstag der Anmeldung: 14.01.2009
(62) Teilanmeldung aus: 06118986.6
(73) Patentinhaber: Schaeffler Technologies AG & Co. KG, 91074 Herzogenaurach (DE)
(72) Erfinder: Tisch, Siegfried, 70839 Gerlingen (DE); Solfrank, Peter, Dr., 96158 Frensdorf (DE)
(74) Vertreter: Gruber, Stephan

(56) Entgegenhaltungen:
- EP-A- 0 753 678
- EP-A- 1 167 737
- EP-A1- 0 243 683
- WO-A1-2005/093286
- DE-A1- 3 326 467
- DE-A1- 3 733 982
- DE-A1- 10 257 562
- DE-A1- 19 835 145
- FR-A1- 2 619 881
- JP-A- H09 151 993
- JP-A- 2005 016 644
- US-A- 5 628 577
- SOLFRANK P.: 'Neues erreichen mit "alten" Techniken, Wälzlager im Hubkolbenmotor', 2010, SCHAEFFLER KOLLOQUIUM Seiten 288 - 301
- FEV-Spectrum, "Technologie Highlights aus dem FEV-Arbeitsspektrum", Ausgabe 23, April 2003
- MAASSEN FRANZ J. DR.-ING. ET AL: 'Reibleistungsreduktion - Konstruktive Maßnahmen zur Verbrauchseinsparung"' MTZ 7-8/2005 1966, Seiten 592 - 597
- Bericht ATZ-Online, "BMW R 1200 GS: Boxermotor mit Ausgleichswelle", 13. Januar 2004
- 'Die Walzlagerpraxis - Handbuch für die Berechnung und Gestaltung von Lagerungen', 1995, VEREINIGTE FACHVERLAGE GMBH, MAINZ Seiten 320 - 321
- BRÄNDLEIN ET AL.: 'Die Wälzlagerpraxis Handbuch für die Berechnung und Gestaltung von Lagerungen', 1998, VEREINIGTE FACHVERLAGE GMBH, MAINZ Seiten 1-21 - 320,321
- BEITZ W. ET AL: 'Dubbel - Taschenbuch für den Maschinenbau', Bd. 14, 1981, SPRINGER-VERLAG, BERLIN - HEIDELBERG - NEW YORK Seiten 425 - 427
- DOHMEN J., DIPL.-ING.: 'Untersuchungen zum reibungsoptimierten Triebwerk an Pkw-Verbrennungsmotoren', 2003 Seiten 1-3, 42-53 - 98-105
- ZIMA S. ET AL: 'Kurbeltriebe: Konstruktion, Berechnung und Erprobung von den Anfängen bis heute', Bd. 2, 1999, FRIEDR. VIEWEG & SOHN VERLAGSGESELLSCHAFT MBH, BRAUNSCHWEIG/WIESBADEN Seiten 156 - 161
- "Ölpumpe-Ausgleichswellen Einheit", Auszug aus dem BMW-Teilekatalog 2011 für das Modell 318i N46 aus dem Jahr 2004

## Beschreibung

### Gebiet der Erfindung

Die Erfindung betrifft eine Radiallagerung eines Außenteils gegenüber einem Innenteil, welches Außenteil und welches Innenteil um eine gemeinsame Längsachse relativ zueinander rotieren, wobei die Radiallagerung einen im Außenteil oder am Innenteil ausgebildeten Lagersitz umfasst, der relativ zu einer den Lagersitz in einer Lastzone beaufschlagenden Radiallast im wesentlichen stillsteht und in Richtung der Längsachse eine über dessen Umfang veränderliche Breite aufweist derart, dass der Lagersitz ausgehend von der Lastzone außerhalb der Lastzone deutlich verjüngt ist.

Die Erfindung betrifft außerdem eine Welle mit einem Lagersitz zur Radiallagerung der Welle in einem Gehäuse, in dem die Welle relativ zum Gehäuse um eine gemeinsame Längsachse rotiert.

### Hintergrund der Erfindung

Ein solcher Belastungsfall der Radiallagerung ist im Stand der Technik grundsätzlich und im Falle der Wälzlagerung unter dem Begriff der sogenannten Punktlast bekannt, bei welcher die Radiallast in Abhängigkeit der Bewegungsverhältnisse gegenüber dem Innenring oder dem Außenring des Wälzlagers im wesentlichen still steht. Im Gegensatz dazu handelt es sich bei der sogenannten Umfangslast um einen Belastungsfall, bei welcher die Radiallast gegenüber dem Innenring oder dem Außenring des Wälzlagers rotiert. Mit dem Begriff "im wesentlichen" soll an dieser Stelle zum Ausdruck gebracht werden, dass die Radiallast aufgrund dynamischer Einflüsse streng genommen nicht punktförmig wirkt, sondern eine gewisse radiale Schwankungsbreite aufweisen kann.

Die von der auf dem Lagersitz ruhenden Lastzone zu übertragenden Kräfte infolge der Radiallast sind ein wesentliches Kriterium für eine lebensdauerfeste Dimensionierung der Breite des Lagersitzes. Dieses Kriterium spielt jedoch für die erforderliche Breite außerhalb der Lastzone eine nur noch untergeordnete Rolle, da hier der Lagersitz einer deutlich geringeren und im Einzelfall gar keiner mechanischen Belastung mehr unterworfen ist. Dennoch sind im Stand der Technik bekannte Lagersitze rotationssymmetrisch mit konstanter Breite ausgebildet und daher für den hier vorliegenden Belastungsfall der Punktlast hinsichtlich der mechanischen Belastbarkeit außerhalb der Lastzone überdimensioniert. Hieraus können sich wesentliche Nachteile dahingehend ergeben, dass der herstellbedingt meist erhaben ausgebildete Lagersitz eine sowohl technisch und finanziell unerwünschte als auch vermeidbare Masse außerhalb der Lastzone mitführt. Gleichzeitig führt dies zu einem unnötig hohen Bearbeitungsaufwand des Lagersitzes, der auch außerhalb der Lastzone vollständig über seine konstante Breite fein zu bearbeiten ist.

Aus der EP 0 753 678 A2 geht eine Radiallagerung eines Gehäuses gegenüber einer darin gelagerten Zahnradwelle hervor, die an der Verzahnung mit einer bzgl. des Gehäuses stillstehenden Radiallast beaufschlagt ist. Der im Gehäuse ausgebildete Gleitlagersitz für die Zahnradwelle weist dementsprechend eine darauf stillstehende Lastzone auf und ist außerhalb der Lastzone deutlich verjüngt.

### Aufgabe der Erfindung

Aufgabe der Erfindung ist daher, eine Radiallagerung bzw. eine Welle der eingangs genannten Art so auszugestalten, dass die zitierten Nachteile mit einfachen Mitteln beseitigt sind. Dabei soll die Gestaltung der Radiallagerung insbesondere zu Gewichts- und Kostenvorteilen sowie günstigen Reibungseigenschaften gegenüber im Stand der Technik bekannten Lagerungen führen.

### Zusammenfassung der Erfindung

Bezüglich der Radiallagerung wird diese Aufgabe erfindungsgemäß dadurch gelöst, dass die Radiallagerung als Wälzlagerung ausgebildet ist und der Lagersitz außerhalb der Lastzone mit einer örtlichen Breite von Null am Umfang unterbrochen ist. Mit einer so ausgebildeten Radiallagerung wird der Umstand optimal berücksichtigt, dass der mit Punktlast beaufschlagte Lagersitz außerhalb der Lastzone erheblich und so verjüngt werden kann, dass der Lagersitz eine örtliche Breite von Null entsprechend einer Unterbrechung des Lagersitzes an dessen Umfang aufweist. In Verbindung mit den vergleichsweise günstigen Reibungseigenschaften der Wälzlagerung können somit das Potenzial bekannter Lagerungen zur Reduzierung von rotativ bewegter Masse, Gewicht, Bearbeitungsaufwand und Kosten ausgeschöpft werden, ohne die Funktionseigenschaften der Radiallagerung zu beeinträchtigen.

Weiterhin ist die Erfindung insbesondere für die nachfolgend beschriebenen Konstellationen in den Belastungsfällen vorteilhaft anwendbar, bei denen der Lagersitz jeweils mit Punktlast beaufschlagt ist. In einem ersten Belastungsfall sollen das Außenteil als Gehäuse, das Innenteil als im Gehäuse gelagerte Welle und der Lagersitz veränderlicher Breite an der Welle ausgebildet sein, wobei die Radiallast mit der Welle umläuft. Ein typisches Beispiel für diesen Belastungsfall ist eine definierte, mit der Welle umlaufende Unwucht, die durch den Lagersitz veränderlicher Breite bei gleichzeitiger Massenreduzierung der Welle vorteilhaft verstärkt werden kann.

In einem zweiten Belastungsfall sollen das Außenteil als Gehäuse, das Innenteil als im Gehäuse gelagerte Welle und der Lagersitz veränderlicher Breite im Gehäuse ausgebildet sein, wobei die Radiallast relativ zum Gehäuse im wesentlichen still steht. In diesem Fall kann ein Lagersitz veränderlicher Breite zu einer Massenreduzierung des Gehäuses führen, wobei eine über den Umfang ungleichmäßige Massenverteilung des Lagersitzes kein Auswuchten des stillstehenden Gehäuses erfordert.

In einem dritten Belastungsfall sollen das Außenteil als Nabe, das Innenteil als ein die Nabe lagernder Achsbolzen und der Lagersitz veränderlicher Breite in der Nabe ausgebildet sein, wobei die Radiallast mit der Nabe umläuft. Dabei kann es im Fall einer Nabenlagerung mit definierter Unwucht an der Nabe trotz einer der Unwucht entgegen gerichteten Wirkung des in Unwuchtrichtung verjüngten Lagersitzes vorteilhaft sein, diesen mit veränderlicher Breite auszubilden, um die Fläche des Lagersitzes zugunsten einer kostengünstigeren Bearbeitung zu verkleinern.

Schließlich sollen in einem vierten Belastungsfall das Außenteil als Nabe, das Innenteil als ein die Nabe lagernder Achsbolzen und der Lagersitz veränderlicher Breite am Achsbolzen ausgebildet sein, wobei die Radiallast relativ zum Achsbolzen im wesentlichen still steht. Auch in diesem Fall wird die Bearbeitung des Lagersitzes mit dessen Verjüngung vereinfacht, während sich gleichzeitig eine Massenreduzierung des Achsbolzens erzielen lässt.

Für den ersten Belastungsfall ist es außerdem vorgesehen, dass die Welle als Unwuchtwelle ausgebildet ist, deren zur Längsachse exzentrisch angeordneter Massenschwerpunkt aus einer oder mehreren Freinehmungen am Außenumfang der Unwuchtwelle resultiert. Dabei sollen die Freinehmungen bezogen auf den Massenschwerpunkt der Unwuchtwelle teilweise oder vollständig jenseits der Längsachse der Unwuchtwelle verlaufen und an den Lagersitz veränderlicher Breite unmittelbar angrenzen. Mit einer derart ausgebildeten Unwuchtwelle kann der zumeist bestehende Zielkonflikt einer kleinstmöglichen Masse bei größtmöglicher Unwucht der Welle besonders vorteilhaft gelöst werden. Dies liegt im wesentlichen darin begründet, dass sich die Freinehmungen nunmehr bis an den verjüngten Lagersitz hin erstrecken und gleichsam als erhöhte negative Masse zur Verstärkung der Unwucht genutzt werden können. Dennoch eröffnet sich gegenüber herkömmlichen Wellen mit Lagersitzen konstanter Breite nicht nur die Möglichkeit, die Unwucht der Welle bei gleichzeitiger Massenreduzierung zu erhöhen. Vielmehr ist im Falle einer unveränderten Unwucht eine darüber noch erheblich hinausgehende Massenreduzierung der Welle dadurch möglich, dass die ursprüngliche Unwuchterhöhung durch weitere, die Masse reduzierende Freinehmungen kompensiert wird, die auf den Massenschwerpunkt bezogen jedoch diesseits der Längsachse an der Unwuchtwelle anzuordnen sind. Selbstverständlich kann auch eine zwischen diesen beiden Grenzfällen angesiedelte Abstimmung der Unwuchtwelle gefunden werden, je nachdem, ob der Auslegungsschwerpunkt eher auf einer moderaten Massenreduzierung bei deutlicher Unwuchterhöhung oder eher auf einer deutlichen Massenreduzierung bei unveränderter Unwuchterhöhung liegt.

In Weiterbildung der Erfindung soll die Unwuchtwelle zu einer Vorrichtung zum Ausgleich von Massenkräften und/oder Massenmomenten einer Hubkolben-Brennkraftmaschine mit einer parallel zur Längsachse der Unwuchtwelle angeordneten und die Unwuchtwelle zumindest mittelbar antreibenden Kurbelwelle der Hubkolben-Brennkraftmaschine gehören. Eine derartige Ausgleichsvorrichtung ist dem Fachmann auf dem Gebiet von Hubkolben-Brennkraftmaschinen insbesondere in Reihen- oder V-Anordnung als wirksame Maßnahme zur Reduzierung von Schwingungen in Folge oszillierender Massenkräfte bekannt. Insbesondere bei Hubkolben-Brennkraftmaschinen für den Fahrzeugbereich steigen jedoch die Anforderungen an die Leichtbaugüte der Hubkolben-Brennkraftmaschine zunehmend, so dass sich vorgenannter Möglichkeiten zur Massenreduzierung der Unwuchtwelle für diesen Einsatzfall besonders vorteilhaft nutzen lassen. Das geringere Massenträgheitsmoment der Unwuchtwelle führt darüber hinaus zu einer verbesserten Dynamik der Hubkolben-Brennkraftmaschine, da einem hohen Drehzahlgradienten weniger Widerstand entgegengesetzt wird. Außerdem lässt sich insbesondere bei Dieselmotoren mit ausgeprägten Drehschwingungen der Kurbelwelle im unteren Drehzahlbereich die mechanische Spitzenbelastung im Antriebsbereich der Ausgleichsvorrichtung mit verringertem Trägheitsmoment der Unwuchtwelle absenken.

Die vorgenannten Betrachtungen gelten in verstärktem Maße dann, wenn die Ausgleichsvorrichtung zwei Unwuchtwellen umfasst, die mit doppelter Kurbelwellendrehzahl gegenläufig rotieren. Diese dem Fachmann auch als Lancaster-Ausgleich bekannte Anordnung dient zum Ausgleich der freien Massenkräfte zweiter Ordnung bei einem Vierzylinder-Reihenmotor.

In einer besonders vorteilhaften Fortbildung der Erfindung ist es ferner vorgesehen, dass zur Radiallagerung der Unwuchtwelle zumindest ein als Nadellager ohne Innenring und vorzugsweise als Nadelhülse ausgebildetes Wälzlager vorgesehen ist. Neben den günstigen Reibungseigenschaften des Wälzlagers gegenüber einem hydrodynamischen Gleitlager, das insbesondere bei tiefen Temperaturen und/oder hochviskosem Hydraulikmittel zu erheblichen Reibleistungsverlusten im Antrieb der Unwuchtwelle führen kann, lassen sich die Vorteile der Massenreduzierung und/oder der Unwuchterhöhung der Unwuchtwelle durch deren als Nadellagerung ausgebildete Radiallagerung noch weiter ausbauen, da der von einem Nadellager umfasste Lagersitz in der Regel stärker verjüngt werden kann, als es im Falle des hydrodynamischen Gleitlagers unter Berücksichtigung eines tragfähigen Schmierfilms möglich wäre. So erlaubt vor allem die Verwendung einer Nadelhülse, die dem Fachmann als Baueinheit kleinster radialer Bauhöhe mit spanlos geformtem Außenring und einem Nadelkranz bekannt ist, eine besonders Bauraum sparende und kostengünstige Radiallagerung der Unwuchtwelle bei ausreichender Dauerfestigkeit.

Bezüglich der Welle wird die Aufgabe der Erfindung dadurch gelöst, dass die Welle als Unwuchtwelle ausgebildet ist, deren zur Längsachse exzentrisch angeordneter Massenschwerpunkt aus einer oder mehreren Freinehmungen am Außenumfang der Unwuchtwelle resultiert, welche Freinehmungen, auf den Massenschwerpunkt der Unwuchtwelle bezogen, teilweise oder vollständig jenseits der Längsachse der Unwuchtwelle verlaufen und an den Lagersitz unmittelbar angrenzen, wobei der Lagersitz relativ zu einer den Lagersitz in einer Lastzone beaufschlagenden und mit der Unwuchtwelle umlaufenden Radiallast im wesentlichen stillsteht und in Richtung der Längsachse eine über dessen Umfang veränderliche Breite aufweist derart, dass der Lagersitz ausgehend von der Lastzone außerhalb der Lastzone deutlich verjüngt und mit einer örtlichen Breite von Null am Umfang unterbrochen ist, wobei die Radiallagerung als Wälzlagerung mit einem Nadellager ohne Innenring ausgebildet ist und wobei der Lagersitz die Innenlaufbahn des Nadellagers ist.

### Kurze Beschreibung der Zeichnungen

Weitere Merkmale der Erfindung ergeben sich aus der nachfolgenden Beschreibung und aus den Zeichnungen, in denen die Radiallagerung grundlegend für die vorgenannten Belastungsfälle und beispielhaft anhand einer Unwuchtwelle einer Vorrichtung zum Massenausgleich einer Hubkolbenbrennmaschine vereinfacht dargestellt ist. Der Lagersitz veränderlicher Breite ist in sämtlichen Figuren zwar deutlich verjüngt, jedoch ohne die erfindungsgemäße Unterbrechung an dessen Umfang dargestellt. Es zeigen:
- Figur 1: die Radiallagerung für den ersten Belastungsfall in schematischer Darstellung;
- Figur 2: die Radiallagerung für den zweiten Belastungsfall in schematischer Darstellung;
- Figur 3: die Radiallagerung für den dritten Belastungsfall in schematischer Darstellung;
- Figur 4: die Radiallagerung für den vierten Belastungsfall in schematischer Darstellung;
- Figur 5: die Vorrichtung zum Massenausgleich einer HubkolbenBrennkraftmaschine in schematischer Darstellung;
- Figur 6: eine der Unwuchtwellen aus Figur 5 in vereinfachter Längsdarstellung;
- Figur 7: den Schnitt AA aus Figur 6 in vergrößerte Darstellung.

### Ausführliche Beschreibung der Zeichnungen

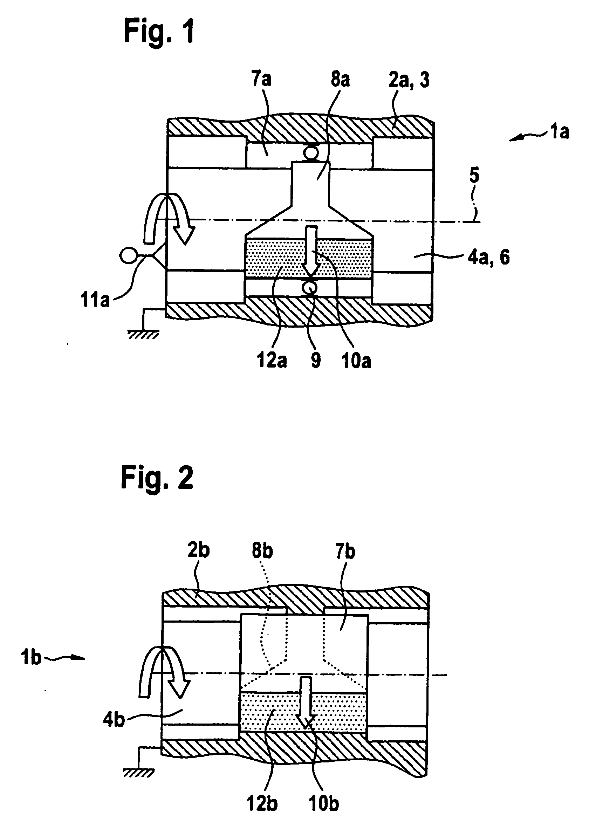

In Figur 1 ist eine Radiallagerung 1a für einen ersten Belastungsfall offenbart. Dargestellt ist ein als Gehäuse 2a ausgebildetes Außenteil 3, in dem ein als Welle 4a ausgebildetes und um eine Längsachse 5 rotierendes Innenteil 6 radial gelagert ist. Zwischen einem im Gehäuse 2a ausgebildeten Lagersitz 7a und einem an der Welle 4a ausgebildeten Lagersitz 8a ist in dem gezeigten Ausführungsbeispiel ein Wälzlager 9 angeordnet, das auch in den Radiallagerungen 1b, 1c, 1d gemäß den Figuren 2-4 als Lagermittel einsetzbar ist. Eine mit der Welle 4a umlaufende Radiallast 10a infolge einer an der Welle 4a angeordneten Unwucht 11a führt zu Umfangslast am Lagersitz 7a des Gehäuses 2a, während die Radiallast 10a relativ zum Lagersitz 8a der Welle 4a und einer darauf ausgebildeten Lastzone 12a (gepunktet dargestellt) im wesentlichen stillsteht. Während der Lagersitz 7a des Gehäuses 2a aufgrund der Umfangslast rotationssymmetrisch ausgebildet ist, weist der mit Punktlast beaufschlagte Lagersitz 8a der Welle 4a eine über dessen Umfang veränderliche Breite auf, indem der Lagersitz 8a ausgehend von der Lastzone 12a außerhalb dieser deutlich verjüngt ist. Dadurch, dass sich die Lastzone 12a über einen Winkel von maximal 180° am Umfang des Lagersitzes 8a der Welle 4a erstreckt - wobei dieser Winkel im dargestellten Fall der Wälzlagerung aufgrund des in der Praxis auftretenden Lagerspiels auch deutlich unterhalb dieses Wertes liegen kann - ist das Wälzlager 9 außerhalb der Lastzone 12a deutlich geringer und im Grenzfall gar nicht belastet, so dass im Falle der Wälzlagerung unter einer Verjüngung des Lagersitzes 8a auch ein Lagersitz 8a mit einer örtlichen Breite von Null entsprechend einer Unterbrechung des Lagersitzes 8a an dessen Umfang zu verstehen ist. Dies gilt analog für die in den Figuren 2-4 dargestellten Belastungsfälle.

Der in Figur 2 dargestellte Belastungsfall einer Radiallagerung 1b unterscheidet sich von derjenigen gemäß Figur 1 dadurch, dass eine in einem Gehäuse 2b gelagerte Welle 4b mit einer gegenüber dem Gehäuse 2b still stehenden Radiallast 10b beaufschlagt ist. Demnach liegt an einem rotationssymmetrisch ausgebildeten Lagersitz 7b der Welle 4b Umfangslast an, während das Gehäuse 2b einen Lagersitz 8b (gepunktet dargestellt) veränderlicher Breite mit still stehender Lastzone 12b (gepunktet dargestellt) aufweist.

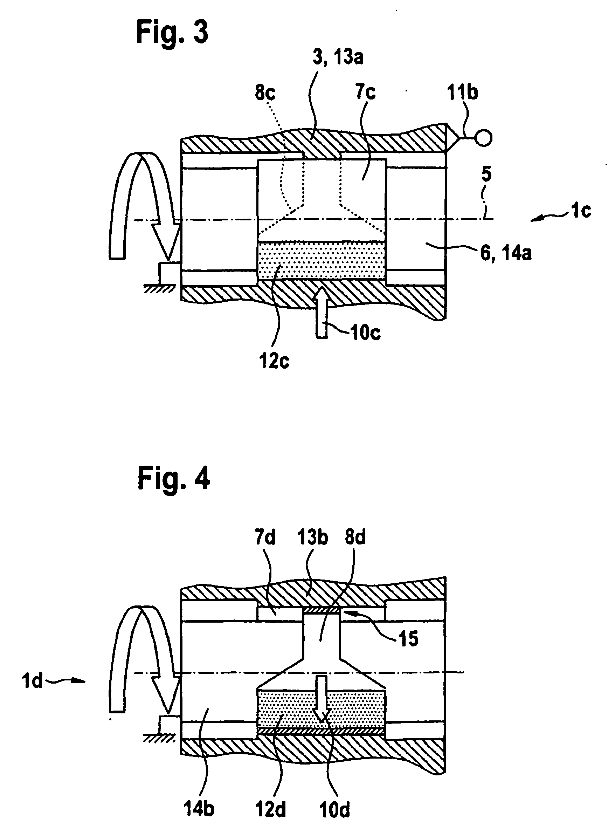

Bei dem in Figur 3 dargestellten Belastungsfall einer Radiallagerung 1 c ist das Außenteil 3 als um die Längsachse 5 rotierende Nabe 13a und das Innenteil 6 als ein in der Nabe 13a lagernder Achsbolzen 14a ausgebildet. Dabei wird ein rotationssymmetrischer Lagersitz 7c des Achsbolzens 14a mit einer Umfangslast erzeugenden Radiallast 10c infolge einer an der Nabe 13a angeordneten Unwucht 11 b belastet. Demgegenüber weist ein mit Punktlast beaufschlagter Lagersitz 8c (gepunktet dargestellt) der Nabe 13a eine über den Umfang veränderliche Breite auf, indem der Lagersitz 8c ausgehend von einer Lastzone 12c (gepunktet dargestellt) außerhalb dieser deutlich verjüngt ist.

Schließlich unterscheidet sich der in Figur 4 dargestellte Belastungsfall einer Radiallagerung 1d von derjenigen gemäß Figur 3 dadurch, dass ein Achsbolzen 14b mit einer ihm gegenüber still stehenden Radiallast 10d beaufschlagt ist. Entsprechend ist in einer um den Achsbolzen 14b rotierenden Nabe 13b ein mit Umfangslast beaufschlagter Lagersitz 7d konstanter Breite ausgebildet, während ein Lagersitz 8d des Achsbolzens 14b mit Punktlast beaufschlagt ist und eine über den Umfang veränderliche Breite aufweist, indem der Lagersitz 8d ausgehend von einer Lastzone 12d (gepunktet dargestellt) außerhalb dieser deutlich verjüngt ist. Anders als in dem in Figur 1 dargestellten Wälzlager 9 ist hierbei zwischen den Lagersitzen 7d und 8d ein hydrodynamisches Gleitlager 15 als Lagermittel ausgebildet.

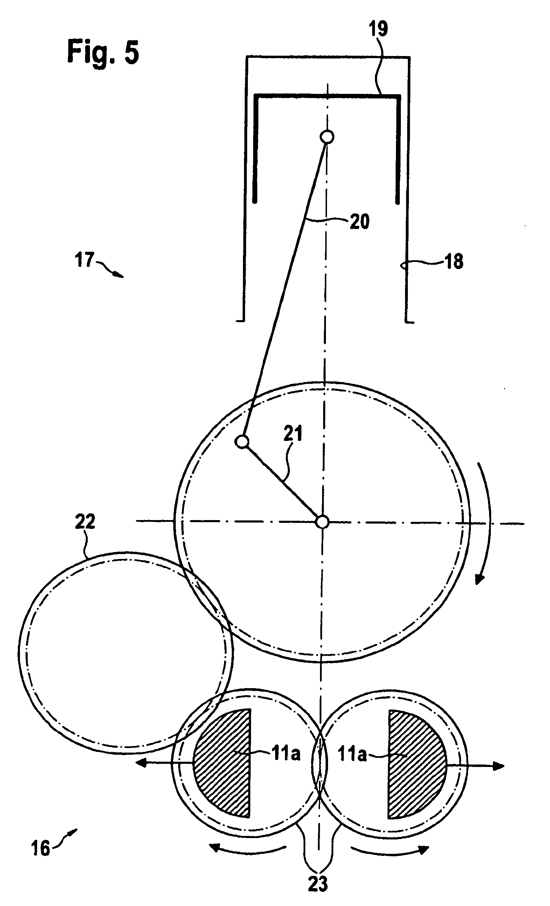

Der in Figur 1 dargestellte Belastungsfall kann unter anderem in der in Figur 5 prinzipiell dargestellten Vorrichtung 16 auftreten. Diese Vorrichtung 16 dient zum Ausgleich von Massenkräften zweiter Ordnung einer anhand eines Getriebeschemas dargestellten Hubkolben-Brennkraftmaschine 17 in Vierzylinder-Reihenbauweise (Lancaster-Ausgleich). Die Hubkolben-Brennkraftmaschine 17 umfasst einen in einem Zylinder 18 oszillierenden Kolben 19, dessen Längsbewegung über ein Pleuel 20 in eine Rotation einer Kurbelwelle 21 umgesetzt wird. Die Kurbelwelle 21 treibt über eine Zwischenwelle 22 zwei Unwuchtwellen 23 mit den Unwuchten 11a an, wobei die Unwuchtwellen 23 parallel zur Kurbelwelle 21 mit doppelter Kurbelwellendrehzahl gegenläufig rotieren.

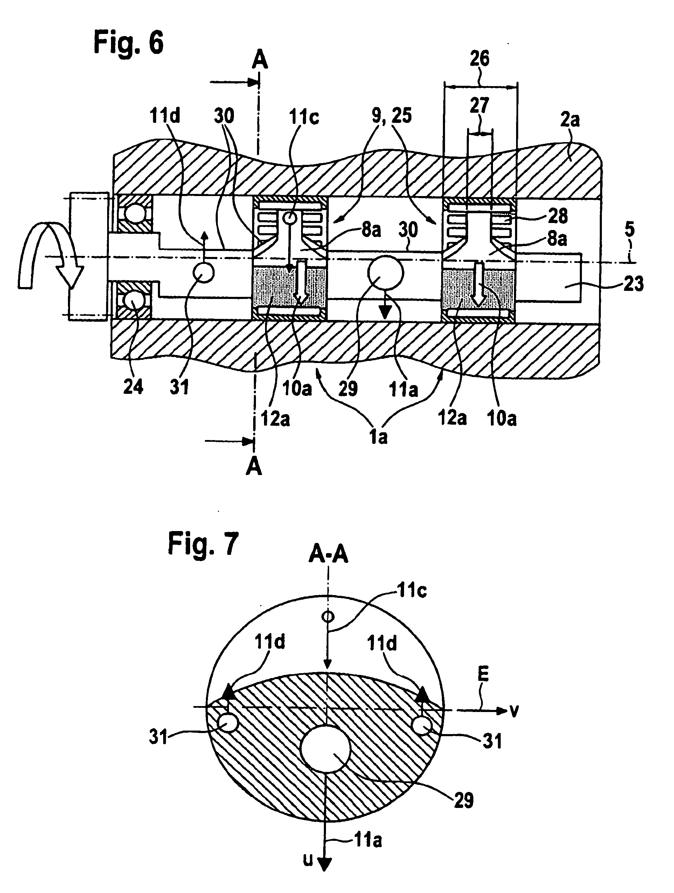

Die Lagerung einer dieser Unwuchtwellen 23 geht detaillierter aus deren Längsdarstellung gemäß Figur 6 hervor. Eine Axiallagerung der Unwuchtwelle 23 erfolgt antriebsseitig über ein Kugellager 24 und deren Radiallagerung 1a über zwei als Nadelhülsen 25 ausgebildete und in das Gehäuse 2a der Hubkolben-Brennkraftmaschine 17 eingepresste Wälzlager 9. Von den Nadelhülsen 25 umfasste Lagersitze 8a der Unwuchtwelle 23 weisen eine über deren Umfang veränderliche Breite derart auf, dass sie außerhalb von mit Punktlast beaufschlagen Lastzonen 12a (gepunktet dargestellt) infolge der Radiallasten 10a aus der mit der Unwuchtwelle 23 umlaufenden Unwucht 11 a deutlich verjüngt sind. Die Breite jeder Nadelhülse 25 ist dabei so bemessen, dass sie einer maximalen Breite 26 des zugehörigen Lagersitzes 8a im Bereich von dessen Lastzone 12a entspricht, während eine minimale Breite 27 des Lagersitzes 8a außerhalb der Lastzone 12a deutlich kleiner als die Länge der Nadeln 28 der Nadelhülse 25 ausgebildet ist. Da lediglich ein druckloser Schmiermittelnebel innerhalb des Gehäuses 2a vorgesehen ist, können die Schmierbedingungen an den lokal und temporär überstehenden Nadeln 28 erheblich verbessert werden. Für den Fall, dass die um die Längsachse 5 der Unwuchtwelle 23 rotierenden Nadeln 28 außerhalb der Lastzone 12a lediglich einer in Richtung des Gehäuses 2a wirkenden Fliehkraft unterliegen, soll die minimale Breite 27 des Lagersitzes 8a in einer nicht dargestellten Ausführungsform auch so gewählt werden können, dass sich der Lagersitz 8a nicht vollständig über einen Umfang von 360° erstreckt, sondern außerhalb der Lastzone 12a unterbrochen ist.

Die in Pfeilrichtung wirkende Unwucht 11a der Unwuchtwelle 23 basiert auf einem zu ihrer Längsachse 5 exzentrischen und in Figur 6 symbolhaft dargestellten Massenschwerpunkt 29. Dessen Exzentrizität resultiert aus Freinehmungen 30 am Außenumfang der Unwuchtwelle 23, welche auf den Massenschwerpunkt 29 bezogen teilweise oder vollständig jenseits der Längsachse 5 verlaufen. Da die Freinehmungen 30 unmittelbar an die Lagersitze 8a angrenzen, führt die Verjüngung der Lagersitze 8a jenseits der Längsachse 5 sowohl zu einer vorteilhaften Massenreduzierung als auch zu einer zusätzlichen Unwucht 11 c gegenüber einer Unwuchtwelle mit Lagersitzen konstanter Breite. Abhängig von den gewünschten Eigenschaften der Vorrichtung 16 kann diese zusätzliche Unwucht 11 c in einer Bandbreite genutzt werden, die sich zwischen den Grenzfällen eines verbesserten Massenausgleichs durch maximale Erhöhung der Unwucht 11 a bei gleichzeitig reduzierter Masse der Unwuchtwelle 23 einerseits und einer maximalen Massenreduzierung bei konstanter Unwucht 11a der Unwuchtwelle 23 andererseits erstreckt.

Eine konstruktive Auslegung im Bereich des zweiten Grenzfalls ist in dem vorliegenden Ausführungsbeispiel in Form einer die zusätzliche Unwucht 11 c kompensierenden Unwucht 11 d symbolhaft dargestellt. Wie auch aus Figur 7 ersichtlich, ist die kompensierende Unwucht 11 d als wenigstens ein Paar von zur Unwuchtrichtung u spiegelsymmetrischen Freinehmungen 31 ausgebildet. Diese sind außerhalb der Lagersitze 8a und auf den Massenschwerpunkt 29 bezogen zumindest überwiegend diesseits der Längsachse 5 am Außenumfang der Unwuchtwelle 23 angeordnet und wirken somit in entgegengesetzter Richtung zur Unwucht 11a des Massenschwerpunkts 29. Im Hinblick auf die maximale Massenreduzierung der Unwuchtwelle 23 ist es dabei zweckmäßig, die Freinehmungen 31 in der Nähe einer Ebene E anzuordnen, die durch die Längsachse 5 und einer zur Unwuchtrichtung u orthogonalen Richtung v aufgespannt ist. Die dort angeordneten Freinehmungen 31 weisen eine vergleichsweise kleine wirksame Exzentrizität zur Längsachse 5 auf, so dass deren in Unwuchtrichtung u negativ wirkende Masse bei konstantem Kompensationsgrad entsprechend groß zugunsten der Massenreduzierung der Unwuchtwelle 23 gewählt werden kann.

### Liste der Bezugszahlen und -zeichen

- 1 a,b,c,d: Radiallagerung
- 2a,b: Gehäuse
- 3: Außenteil
- 4a,b: Welle
- 5: Längsachse
- 6: Innenteil
- 7a,b,c,d: Lagersitz
- 8a,b,c,d: Lagersitz
- 9: Wälzlager
- 10a,b,c,d: Radiallast
- 11 a,b,c,d: Unwucht
- 12a,b,c,d: Lastzone
- 13a,b: Nabe
- 14a,b: Achsbolzen
- 15: Gleitlager
- 16: Vorrichtung
- 17: Hubkolben-Brennkraftmaschine
- 18: Zylinder
- 19: Kolben
- 20: Pleuel
- 21: Kurbelwelle
- 22: Zwischenwelle
- 23: Unwuchtwelle
- 24: Kugellager
- 25: Nadelhülse
- 26: maximale Breite
- 27: minimale Breite
- 28: Nadel
- 29: Massenschwerpunkt
- 30: Freinehmung
- 31: Freinehmung

- E: Ebene
- u: Unwuchtrichtung
- v: zur Unwucht orthogonale Richtung

## Patentansprüche

1. Radiallagerung (1a, 1b, 1c, 1d) eines Außenteils (3) gegenüber einem Innenteil (6), welches Außenteil (3) und welches Innenteil (6) um eine gemeinsame Längsachse (5) relativ zueinander rotieren, wobei die Radiallagerung (1a, 1b, 1c, 1d) einen im Außenteil (3) oder am Innenteil (6) ausgebildeten Lagersitz (8a, 8b, 8c, 8d) umfasst, der relativ zu einer den Lagersitz (8a, 8b, 8c, 8d) in einer Lastzone (12a, 12b, 12c, 12d) beaufschlagenden Radiallast (10a, 10b, 10c, 10d) im wesentlichen stillsteht und in Richtung der Längsachse (5) eine über dessen Umfang veränderliche Breite aufweist derart, dass der Lagersitz (8a, 8b, 8c, 8d) ausgehend von der Lastzone (12a, 12b, 12c, 12d) außerhalb der Lastzone (12a, 12b, 12c, 12d) deutlich verjüngt ist, **dadurch gekennzeichnet, dass** die Radiallagerung (1a, 1b, 1c, 1d) als Wälzlagerung ausgebildet ist und der Lagersitz (8a, 8b, 8c, 8d) außerhalb der Lastzone (12a, 12b, 12c, 12d) mit einer örtlichen Breite von Null am Umfang unterbrochen ist.

2. Radiallagerung nach Anspruch 1, **dadurch gekennzeichnet, dass** das Außenteil (3) als Gehäuse (2a), das Innenteil (6) als im Gehäuse (2a) gelagerte Welle (4a) und der Lagersitz (8a) veränderlicher Breite an der Welle (4a) ausgebildet sind, wobei die Radiallast (10a) mit der Welle (4a) umläuft.

3. Radiallagerung nach Anspruch 1, **dadurch gekennzeichnet, dass** das Außenteil (3) als Gehäuse (2b), das Innenteil (6) als im Gehäuse (2b) gelagerte Welle (4b) und der Lagersitz (8b) veränderlicher Breite im Gehäuse (2b) ausgebildet sind, wobei die Radiallast (10b) relativ zum Gehäuse (2b) im wesentlichen stillsteht.

4. Radiallagerung nach Anspruch 1, **dadurch gekennzeichnet, dass** das Außenteil (3) als Nabe (13a), das Innenteil (6) als ein die Nabe (13a) lagernder Achsbolzen (14a) und der Lagersitz (8c) veränderlicher Breite in der Nabe (13a) ausgebildet sind, wobei die Radiallast (10c) mit der Nabe (13a) umläuft.

5. Radiallagerung nach Anspruch 1, **dadurch gekennzeichnet, dass** das Außenteil (3) als Nabe (13b), das Innenteil (6) als ein die Nabe (13b) lagernder Achsbolzen (14b) und der Lagersitz (8d) veränderlicher Breite am Achsbolzen (14b) ausgebildet sind, wobei die Radiallast (10d) relativ zum Achsbolzen (14b) im wesentlichen stillsteht.

6. Radiallagerung nach Anspruch 2, **dadurch gekennzeichnet, dass** die Welle (4a) als Unwuchtwelle (23) ausgebildet ist, deren zur Längsachse (5) exzentrisch angeordneter Massenschwerpunkt (29) aus einer oder mehreren Freinehmungen (30) am Außenumfang der Unwuchtwelle (23) resultiert, welche Freinehmungen (30), auf den Massenschwerpunkt (29) der Unwuchtwelle (23) bezogen, teilweise oder vollständig jenseits der Längsachse (5) der Unwuchtwelle (23) verlaufen und an den Lagersitz (8a) veränderlicher Breite unmittelbar angrenzen.

7. Radiallagerung nach Anspruch 6, **dadurch gekennzeichnet, dass** die Unwuchtwelle (23) zu einer Vorrichtung (16) zum Ausgleich von Massenkräften und/oder Massenmomenten einer Hubkolben-Brennkraftmaschine (17) mit einer parallel zur Längsachse (5) der Unwuchtwelle (23) angeordneten und die Unwuchtwelle (23) zumindest mittelbar antreibenden Kurbelwelle (21) der Hubkolben-Brennkraftmaschine (17) gehört.

8. Radiallagerung nach Anspruch 7, **dadurch gekennzeichnet, dass** die Vorrichtung (16) zwei mit doppelter Kurbelwellendrehzahl gegenläufig rotierende Unwuchtwellen (23) umfasst.

9. Radiallagerung nach Anspruch 6, **dadurch gekennzeichnet, dass** zur Wälzlagerung der Unwuchtwelle (23) zumindest ein als Nadellager ohne Innenring und vorzugsweise als Nadelhülse (25) ausgebildetes Wälzlager (9) vorgesehen ist.

10. Welle (4a) mit einem Lagersitz (8a) zur Radiallagerung (1a) der Welle (4a) in einem Gehäuse (2a), in dem die Welle (4a) relativ zum Gehäuse (2a) um eine gemeinsame Längsachse (5) rotiert, **dadurch gekennzeichnet, dass** die Welle (4a) als Unwuchtwelle (23) ausgebildet ist, deren zur Längsachse (5) exzentrisch angeordneter Massenschwerpunkt (29) aus einer oder mehreren Freinehmungen (30) am Außenumfang der Unwuchtwelle (23) resultiert, welche Freinehmungen (30), auf den Massenschwerpunkt (29) der Unwuchtwelle (23) bezogen, teilweise oder vollständig jenseits der Längsachse (5) der Unwuchtwelle (23) verlaufen und an den Lagersitz (8a) unmittelbar angrenzen, wobei der Lagersitz (8a) relativ zu einer den Lagersitz (8a) in einer Lastzone (12a) beaufschlagenden und mit der Unwuchtwelle (23) umlaufenden Radiallast (10a) im wesentlichen stillsteht und in Richtung der Längsachse (5) eine über dessen Umfang veränderliche Breite aufweist derart, dass der Lagersitz (8a) ausgehend von der Lastzone (12a) außerhalb der Lastzone (12a) deutlich verjüngt und mit einer örtlichen Breite von Null am Umfang unterbrochen ist, wobei die Radiallagerung (1a) als Wälzlagerung mit einem Nadellager ohne Innenring ausgebildet ist und wobei der Lagersitz (8a) die Innenlaufbahn des Nadellagers ist.

## Claims

1. Radial mounting (1a, 1b, 1c, 1d) of an outer part (3) with respect to an inner part (6), which outer part (3) and which inner part (6) rotate in relation to each other about a common longitudinal axis (5), the radial mounting (1a 1b, 1c, 1d) comprising a bearing seat (8a, 8b, 8c, 8d) that is formed in the outer part (3) or on the inner part (6), remaining substantially stationary in relation to a radial load (10a, 10b, 10c, 10d) that acts on the bearing seat (8a, 8b, 8c, 8d) in a load zone (12a, 12b, 12c, 12d) and having a width that varies over its circumference in the direction of the longitudinal axis (5) in such a way that, starting from the load zone (12a, 12b, 12c, 12d), the bearing seat (8a, 8b, 8c, 8d) tapers significantly outside the load zone (12a, 12b, 12c, 12d), **characterized in that** the radial mounting (1a 1b, 1c, 1d) is formed as a rolling mounting and the bearing seat (8a, 8b, 8c, 8d) is interrupted outside the load zone (12a, 12b, 12c, 12d) with a local width of zero at the circumference.

2. Radial mounting according to Claim 1, **characterized in that** the outer part (3) is formed as a housing (2a), the inner part (6) is formed as a shaft (4a) mounted in the housing (2a) and the bearing seat (8a) of variable width is formed on the shaft (4a), the radial load (10a) rotating along with the shaft (4a).

3. Radial mounting according to Claim 1, **characterized in that** the outer part (3) is formed as a housing (2b), the inner part (6) is formed as a shaft (4b) mounted in the housing (2b) and the bearing seat (8b) of variable width is formed in the housing (2b), the radial load (10b) remaining substantially stationary in relation to the housing (2b).

4. Radial mounting according to Claim 1, **characterized in that** the outer part (3) is formed as a hub (13a), the inner part (6) is formed as an axial pin (14a) bearing the hub (13a) and the bearing seat (8c) of variable width is formed in the hub (13a), the radial load (10c) rotating along with the hub (13a).

5. Radial mounting according to Claim 1, **characterized in that** the outer part (3) is formed as a hub (13b), the inner part (6) is formed as an axial pin (14b) bearing the hub (13b) and the bearing seat (8d) of variable width is formed on the axial pin (14b), the radial load (10d) remaining substantially stationary in relation to the axial pin (14b).

6. Radial mounting according to Claim 2, **characterized in that** the shaft (4a) is formed as an eccentric shaft (23), the centre of mass (29) of which, which is arranged eccentrically in relation to the longitudinal axis (5), results from one or more recesses (30) on the outer circumference of the eccentric shaft (23), which recesses (30) extend partially or completely on the opposite side of the longitudinal axis (5) of the eccentric shaft (23), with respect to the centre of mass (29) of the eccentric shaft (23), and directly adjoin the bearing seat (8a) of variable width.

7. Radial mounting according to Claim 6, **characterized in that** the eccentric shaft (23) belongs to a device (16) for balancing the forces of inertia and/or moments of inertia of a reciprocating internal combustion engine (17) with a crankshaft (21) of the reciprocating internal combustion engine (17) that is arranged parallel to the longitudinal axis (5) of the eccentric shaft (23) and at least indirectly drives the eccentric shaft (23).

8. Radial mounting according to Claim 7, **characterized in that** the device (16) comprises two eccentric shafts (23) rotating in opposite directions at twice the crankshaft speed.

9. Radial mounting according to Claim 6, **characterized in that** at least one rolling bearing (9) formed as a needle bearing without an inner race, and preferably as a needle bush (25), is provided for the rolling mounting of the eccentric shaft (23).

10. Shaft (4a) with a bearing seat (8a) for the radial mounting (1a) of the shaft (4a) in a housing (2a), in which the shaft (4a) rotates in relation to the housing (2a) about a common longitudinal axis (5), **characterized in that** the shaft (4a) is formed as an eccentric shaft (23), the centre of mass (29) of which, which is arranged eccentrically in relation to the longitudinal axis (5), results from one or more recesses (30) on the outer circumference of the eccentric shaft (23), which recesses (30) extend partially or completely on the opposite side of the longitudinal axis (5) of the eccentric shaft (23), with respect to the centre of mass (29) of the eccentric shaft (23), and directly adjoin the bearing seat (8a), the bearing seat (8a) remaining substantially stationary in relation to a radial load (10a) that acts on the bearing seat (8a) in a load zone (12a) and rotates with the eccentric shaft (23) and having a width that varies over its circumference in the direction of the longitudinal axis (5) in such a way that, starting from the load zone (12a) the bearing seat (8a) tapers significantly outside the load zone (12a) and is interrupted with a local width of zero at the circumference, the radial mounting (1a) being formed as a rolling mounting with a needle bearing without an inner race, and the bearing seat (8a) being the inner raceway of the needle bearing.

## Revendications

1. Support de palier radial (1a, 1b, 1c 1d) d'une partie extérieure (3) vis-à-vis d'une partie intérieure (6), laquelle partie extérieure (3) et laquelle partie intérieure (6) tournent l'une par rapport à l'autre autour d'un axe longitudinal commun (5), le support de palier radial (1a 1b, 1c, 1d) comprenant un siège de palier (8a, 8b, 8c, 8d) réalisé dans la partie extérieure (3) ou sur la partie intérieure (6), lequel est essentiellement immobile par rapport à une charge radiale (10a, 10b, 10c, 10d) sollicitant le siège de palier (8a, 8b, 8c, 6d) dans une zone de charge (12a, 12b, 12c, 12d) et présentant dans la direction de l'axe longitudinal (5) une largeur variable sur sa périphérie, de telle sorte que le siège de palier (8a, 8b, 8c, 8d) se rétrécisse nettement depuis la zone de charge (12a, 12b, 12c, 12d) jusqu'en dehors de la zone de charge (12a, 12b, 12c, 12d), **caractérisé en ce que** le support de palier radial (1a 1b, 1c, 1d) est réalisé sous forme de support de palier à roulement et le siège de palier (8a, 8b, 8c, 8d) en dehors de la zone de charge (12a, 12b, 12c, 12d) est interrompu avec une largeur locale nulle à la périphérie.

2. Support de palier radial selon la revendication 1, **caractérisé en ce que** la partie extérieure (3) est réalisée sous forme de boîtier (2a), la partie intérieure (6) est réalisée sous forme d'arbre (4a) monté dans le boîtier (2a) et le siège de palier (8a) de largeur variable est réalisé sur l'arbre (4a), la charge radiale (10a) tournant avec l'arbre (4a).

3. Support de palier radial selon la revendication 1, **caractérisé en ce que** la partie extérieure (3) est réalisée sous forme de boîtier (2b), la partie intérieure (6) est réalisée sous forme d'arbre (4b) monté dans le boîtier (2b), et le siège de palier (8b) de largeur variable est réalisé dans le boîtier (2b), la charge radiale (10b) étant essentiellement immobile par rapport au boîtier (2b).

4. Support de palier radial selon la revendication 1, **caractérisé en ce que** la partie extérieure (3) est réalisée sous forme de moyeu (13a), la partie intérieure (6) est réalisée sous forme de boulon d'axe (14a) supportant le moyeu (13a) et le siège de palier (8c) de largeur variable est réalisé dans le moyeu (13a), la charge radiale (10c) tournant avec le moyeu (13a).

5. Support de palier radial selon la revendication 1, **caractérisé en ce que** la partie extérieure (3) est réalisée sous forme de moyeu (13b), la partie intérieure (6) est réalisée sous forme de boulon d'axe (14b) supportant le moyeu (13b) et le siège de palier (8d) de largeur variable est réalisé sur le boulon d'axe (14b), la charge radiale (10d) étant essentiellement immobile par rapport au boulon d'axe (14b).

6. Support de palier radial selon la revendication 2, **caractérisé en ce que** l'arbre (4a) est réalisé sous forme d'arbre de déséquilibre (23), dont le centre de masse (29) disposé de manière excentrée par rapport à l'axe longitudinal (5) résulte d'un ou de plusieurs évidements (30) sur la périphérie extérieure de l'arbre de déséquilibre (23), lesquels évidements (30), par rapport au centre de masse (29) de l'arbre de déséquilibre (23), s'étendant en partie ou complètement de chaque côté de l'axe longitudinal (5) de l'arbre de déséquilibre (23) et étant directement adjacents au siège de palier (8a) de largeur variable.

7. Support de palier radial selon la revendication 6, **caractérisé en ce que** l'arbre de déséquilibre (23) appartient à un dispositif (16) pour compenser les forces de masse et/ou les couples de masse d'un moteur à combustion interne à piston alternatif (17) avec un vilebrequin (21) du moteur à combustion interne à piston alternatif (17) entraînant au moins de manière indirecte l'arbre de déséquilibre (23) et disposé parallèlement à l'axe longitudinal (5) de l'arbre de déséquilibre (23).

8. Support de palier radial selon la revendication 7, **caractérisé en ce que** le dispositif (16) comprend deux arbres de déséquilibre (23) tournant en sens inverse avec le double de la vitesse de rotation du vilebrequin.

9. Support de palier radial selon la revendication 6, **caractérisé en ce que** pour le support de palier à roulement de l'arbre de déséquilibre (23), on prévoit au moins un palier à roulement (9) réalisé sous forme de palier à aiguille sans bague interne et de préférence sous forme de palier à roulement (9) réalisé en tant que douille à aiguille (25).

10. Arbre (4a) comprenant un siège de palier (8a) pour le support de palier radial (1a) de l'arbre (4a) dans un boîtier (2a), dans lequel l'arbre (4a) tourne par rapport au boîtier (2a) autour d'un axe longitudinal commun (5), **caractérisé en ce que** l'arbre (4a) est réalisé en tant qu'arbre de déséquilibre (23), dont le centre de masse (29) disposé de manière excentrée par rapport à l'axe longitudinal (5) résulte d'un ou de plusieurs évidements (30) sur la périphérie extérieure de l'arbre de déséquilibre (23), lesquels évidements (30), par rapport au centre de masse (29) de l'arbre de déséquilibre (23), s'étendant en partie ou complètement de chaque côté de l'axe longitudinal (5) de l'arbre de déséquilibre (23) et étant directement adjacents au siège de palier (8a), le siège de palier (8a) étant essentiellement immobile par rapport à une charge radiale (10a) sollicitant le siège de palier (8a) dans une zone de charge (12a) et tournant avec l'arbre de déséquilibre (23) et présentant, dans la direction de l'axe longitudinal (5), une largeur variable sur sa périphérie, de telle sorte que le siège de palier (8a) se rétrécisse nettement depuis la zone de charge (12a) jusqu'en dehors de la zone de charge (12a) et soit interrompu avec une largeur locale nulle à la périphérie, le support de palier radial (1a) étant réalisé sous forme de support de palier à roulement avec un palier à aiguilles sans bague intérieure, le siège de palier (8a) étant le chemin de roulement intérieur du palier à aiguilles.
